# EUROPEAN PATENT APPLICATION

(11) **EP 4 086 297 A1**
(43) Date of publication of application: **09.11.2022**
(21) Application number: 21172334.1
(22) Date of filing: 05.05.2021
(51) Int. Cl.: C08G 73/10, C08G 73/14, C08K 3/36

(54) **TWO-PHASE COMPOSITE COMPRISING AN INORGANIC MESOPOROUS MATERIAL EMBEDDED IN A POLYIMIDE AEROGEL MATRIX AND METHODS FOR PRODUCING SAME**

(71) Applicant: EMPA Eidgenössische Materialprüfungs- und Forschungsanstalt, CH-8600 Dübendorf (CH)
(72) Inventor: KANTOR, Zuzanna, 32-089 Wielka Wies (PL); ZHAO, Shanyu, 8600 Dübendorf (CH); MALFAIT, Wim, 8053 Zürich (CH); KOEBEL, Matthias, 8306 Brüttisellen (CH)
(74) Representative: Kasche & Partner

(57) **Abstract**

The present invention pertains to a two-phase composite comprising an inorganic mesoporous material embedded in a polyimide aerogel matrix, wherein particles of the inorganic mesoporous material in the composite have a diameter larger than or equal to 1 µm and the two-phase composite has a thermal conductivity of less than about 30 mW/(m^{∗}K), as well as to methods for the manufacture thereof and uses of the two-phase composite.

## Description

The present invention pertains to a two-phase composite comprising an inorganic mesoporous material embedded in a polyimide aerogel matrix, wherein particles of the inorganic mesoporous material in the composite have a diameter larger than or equal to 1 µm and the two-phase composite has a thermal conductivity of less than about 30 mW/(m^{∗}K), as well as to methods for the manufacture thereof and uses of the two-phase composite.

Polyimides (PI) are high-performance engineering polymers with high decomposition temperature, chemical resistance, low refractive indices and low permittivity. These polymers have a wide range of applications in optoelectronics, aviation, electronics, filtration and aeronautics. PI is generally prepared by a step-growth condensation polymerization of diamines and dianhydrides, and the resulting polyamic acid is imidized thermally or chemically. In order to prepare an aerogel material, the solid content is controlled by adjusting the polymer concentration in an organic solvent, and the porous structure can be maintained by supercritical CO₂ drying (M.A.B. Meador et al., ACS Appl. Mater. Interfaces 7 (2015) 1240-1249; M.A.B. Meador et al., ACS Appl. Mater. Interfaces 4 (2012) 536-544) or ambient pressure drying (US9963571 B2). Established routes for synthesizing PI aerogel involve pyromellitic dianhydride (PMDA) and 4,4' oxydianiline (ODA) in N-methyl-2-pyrrolidone (NMP) which are thermally (200 °C) imidized to PI aerogels. Also 4,4' methylene dianiline, 4,4' methylene di-isocyanate have been used, however, those polymerizations lead to linear chains, and the high degree of structure planarity and strong intermolecular forces lead to bad volumetric stability during the gelation and imidization process. To circumvent this, the shrinkage can be controlled by the introduction of amine-based crosslinkers, e.g. 1,3,5-tris(4-aminophenyl)benzene or 1,3,5-triaminophenoxybenzene (TAB) etc., which can form covalent bonds between the linear polymer chains. The result is a 3D network, which can reduce the shrinkage during the polymerization and imidization at high temperatures (see, e.g., H. Guo et al., ACS Appl. Mater. Interfaces 3 (2011) 546-552). The usage of an excess of acetic anhydride (AA) has been developed to remove the by-product water and the imidization can be completed at room temperature by using pyridine or TAB. Meanwhile, many other multifunctional cross-linkers have been applied for the fabrication of polyimide aerogels, e.g. 2,4,6-tris(4-aminophenyl)pyridine crosslinked with BPDA and rigid benzimidazole oligomers (D. Shen et al., Chem. Lett. 42 (2013) 1545-1547), amine end-capped oligomers (e.g. BPDA and DMBZ or ODA oligomer) crosslinked with triacid chlorides (e.g. 1,3,5-benzenetricarbonyl trichloride (BTC)), isocyanates (Desmodur N3300A), poly(maleic) anhydride and 1,3,5-triaminophenoxybenzene (TAB) (B.N. Nguyen et al., ACS Appl. Mater. Interfaces 9 (2017) 27313-27321).

Even though the polymeric crosslinker has been shown to reduce the shrinkage of the polyimide aerogel during synthesis, there is still a common problem of PI aerogels: a high degree of volume shrinkage when exposed to high temperatures. Silica/silanes have been introduced to form more rigid networks, e.g. 3-aminopropyltrimethoxysilane (APTES), bis(trimethoxysilylpropyl)amine (BTMSPA) and octa(aminophenyl)-silsesquioxane (OAPS). Furthermore, inorganic silica or silica aerogel fillers have been reported to stabilize the PI aerogels (M.A.B. Meador et al., Polymer Preprints 51 (2010) 265; S. Wu et al., RSC Adv. 6 (2016) 58268-58278). After adding the silica or silica aerogel fillers, the shrinkage during the synthesis could be improved, but due to the high viscosity of the polyamic acid solution, the mixture with the silica particles required vigorous stirring for a long period of time, which process firstly over-breaks the silica aerogel particles and downgrades the aerogel properties, and secondly promotes the penetration of the oligomers/polymers into the silica aerogel pores, which ultimately leads to a densification of the composites. The reported properties of the PI-silica aerogels are not as good as those of either silica aerogel or PI aerogel alone: for example, the surface area is reported up to 450 m² g⁻¹, the thermal conductivity is around 28.3-37.1 mW m⁻¹K⁻¹, and the high temperature stability was not examined.

It is the objective of the present invention to provide a polyimide material with low shrinkage at high temperatures and low thermal conductivity.

In a first aspect, the present invention is directed to a two-phase composite comprising an inorganic mesoporous material embedded in a polyimide aerogel matrix, wherein
(a) particles of the inorganic mesoporous material, optionally silica aerogel, in the composite have a diameter larger than or equal to 1 µm, optionally between 1 and 4000 µm, optionally between 4 and 200 µm, and
(b) the two-phase composite has a thermal conductivity of less than about 30 mW/(m^{∗}K), optionally less than about 25, 21 or 18 mW/(m^{∗}K).

Optionally, the particles of the inorganic mesoporous material of the present invention, optionally silica aerogel, in the composite have a diameter between 4 and 20 µm.

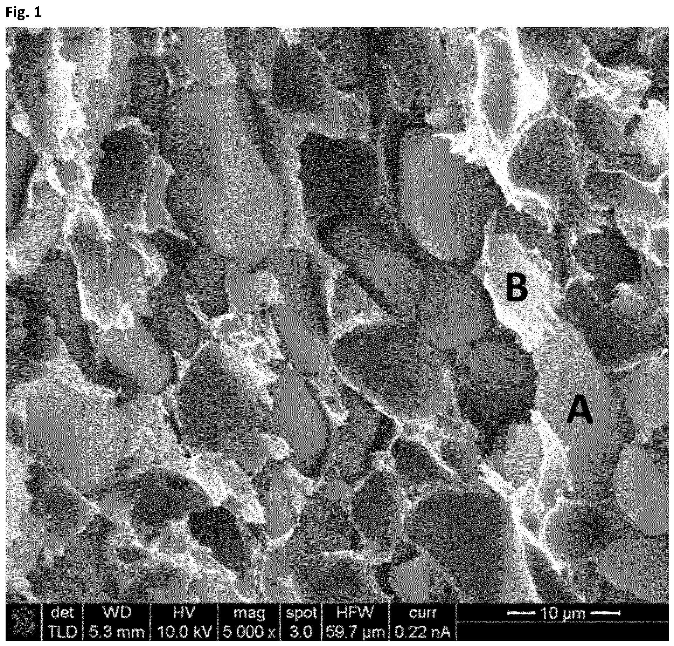

The composite material described herein has a two-phase structure. This means that the composite is not a homogeneous mixture of the inorganic mesoporous material and the polyimide aerogel matrix and the polyimide is not distributed both between and within the inorganic mesoporous material. Rather, the composite described herein is one, wherein the inorganic mesoporous material, e.g. silica aerogel, is embedded in a polyimide aerogel matrix, e.g. in the form of grains comprised of the mesoporous material. An example for a two-phase composite structure as defined herein is given in Fig. 1. The presence of the two-phase structure can be verified by known methods in the art, e.g. by SEM imaging.

The two-phase composite material of the present invention features a low thermal conductivity, a high surface area and high temperature stability. Without wishing to be bound by theory, it is believed that these superior properties are at least partly due to the two-phase structure which is significantly less dense than a homogeneous mixture of the same components.

The inorganic mesoporous material as described herein can be any inorganic or silica-based material that has a mesoporous structure. The term mesoporous as used herein is commonly understood in the art and relates to a material having pores with a diameter of, e.g., 2 to 50 nm.

The particle diameter of the inorganic mesoporous material, as used herein, refers to the diameter of the individual particles of the mesoporous material.

The thermal conductivity of the composite of the present invention can be measured by known methods providing essentially the same results. These methods include, e.g., a guarded hot plate, transient hot wire, heat-flow meter, or laser flash diffusivity, where the guarded hot plate is the preferred method for low thermal conductivity materials.

In an embodiment, the two-phase composite of the present invention is one, wherein the inorganic mesoporous material is selected from silica aerogel, fumed silica, precipitated silica, alumina, zirconia and carbon. For example, alumina, zirconia and carbon include the aerogels of these materials.

The two-phase composite of the present invention may comprise or consist of silica-based materials, e.g. as the inorganic mesoporous material, optionally hydrophilic or hydrophobic silica materials.

Examples for hydrophilic silica materials include hydrophilic silica aerogel, fumed silica and precipitated silica. Fumed silica and precipitated silica are typically hydrophilic. Hydrophilic silica aerogel can, for example, be produced through a heat treatment of hydrophobic silica aerogel.

Examples for hydrophobic silica materials include hydrophobic silica, hydrophobic fumed silica and hydrophobic precipitated silica. Hydrophobic silica aerogel is known in the art and includes, e.g. commercially available materials, such as Cabot granules, Cabot powders, JIOS powders, or Enersens granules.

The inorganic mesoporous material as described herein may also include or be made of silica-based materials that are organofunctionalized, e.g. organofunctional silanes or siloxanes. Examples for organofunctionalized silica-based materials include monoorganofunctional or diorganofunctional siloxanes, optionally monomeric or oligomeric D-type or T-type siloxanes, made from silanes selected from the group consisting of R¹R²SiX₂ and R-SiX₃, wherein
- R¹ and R² are independently selected from the group consisting of methyl, vinyl and phenyl;
- R is selected from the group consisting of methyl, vinyl, propyl, phenyl and -(CH₂)ₙY, wherein
   - n is 1, 2 or 3; and
   - Y is selected from the group consisting of amino, mercapto, methacrylate, acrylate, trifluoromethyl, chloro and glycidyl; and
- X is selected from the group consisting of chloro, methoxy and ethoxy;
optionally a silane selected from the group consisting of dimethyldimethoxysilane, dimethyldiethoxysilane, divinyldimethoxysilane, divinyldiethoxysilane, diphenyldimethoxysilane, diphenyldiethoxysilane, dimethyldichlorosilane, divinyldichlorosilane, diphenyldichlorosilane, methyltrimethoxysilane, methyltriethoxysilane, vinyltrimethoxysilane, vinyltriethoxysilane, propyltrimethoxysilane, propyltriethoxysilane, phenyltrimethoxysilane, phenyltriethoxysilane, aminotrimethoxysilane, aminotriethoxysilane, glycidoxy-propyltrimethoxysilane, glycidyoxy-propyltrimethoxysilane, glycidoxy-methyltrimethoxysilane, glycidoxy-methyltriethoxysilane, methyltrichlorosilane, vinyltrichlorosilane, propyltrichlorosilane, phenyltrichlorosilane, and combinations thereof and optionally in monomer or oligomer form.

In an embodiment, the two-phase composite of the present invention is one, wherein the polyimide aerogel is crosslinked, optionally has a degree of crosslinking of more than 90%. Crosslinking polyimide aerogels is known in the art and the skilled person can routinely choose suitable cross-linkers for crosslinking the polyimide aerogel to a desired degree. The degree of crosslinking can be routinely determined by known methods in the art, e.g., by the swelling degree in protic solvents with high polarity, such as IPA, ethanol, *tert*-butyl alcohol, or by mechanical properties-crosslinking degree correlation.

In an embodiment, the two-phase composite of the present invention is one, wherein
(a) the specific surface area of the composite is greater than 300 m²/g, optionally greater than 500 m²/g, optionally 500 to 900 m²/g; and/or
(b) the water contact angles on the composite are larger than about 100°, optionally larger than about 130° or 150°.

The specific surface area of the composite can be routinely determined by known methods in the art, e.g. by N₂ adsorption-desorption using BET theory. Also, the surface wettability of the composite can be routinely determined by the water contact angle for which there are known methods in the art.

The polyimide, as used herein, refers to any polyimide that is chemically stable. For example, any commercially available polyamine and diamine, and polyanhydride and dianhydride, can be used to form the polyimide of the present invention. For example, aromatic diamines and/or polyamines and dianhydrides can be used. Alternatively, aliphatic diamines and dianhydrides can be used. If used, the crosslinkers can be based on aromatic or aliphatic scaffolds.

In an embodiment, the two-phase composite of the present invention is one, wherein the polyimide aerogel comprises
(a) diamine monomers selected from the group consisting of 4,4'-diaminodiphenyl ether (ODA); 2,2'-dimethylbenzidine (DMBZ); 9,9-bis(4-aminophenyl)fluorene (BAPF); 2-bis[4-(4-aminophenoxy) phenyl]propane (BAPP); and 4,4'-diaminodiphenylmethane (MDA) and combinations thereof;
(b) dianhydride monomers selected from the group consisting of 3,3',4,4'-biphenyltetracarboxylic dianhydride (BPDA); 4,4'-diphenyl ether dianhydride (ODPA); pyromellitic dianhydride (PMDA); 3,3',4,4 '-benzophenonetetracarboxylic dianhydride (BTDA); and combinations thereof; optionally BPDA and ODPA; and/or
(c) crosslinkers selected from the group consisting of 1,3,5-benzenetricarbonyl trichloride (BTC); 1,3,5-tris(4-aminophenoxy)benzene (TAB); polymaleic anhydride (PMA); tris(4-aminophenyl amine) (TAPA); and triisocyanate; optionally BTC and TAB.

Optionally, the molar ratio of diamine to dianhydride monomers within the polyimide described herein for all aspects and embodiments is n:(n+1) or (n+1):n, wherein n is an integer ≥5, optionally 5 to 100, optionally 5 to 50, optionally 10 to 30.

For example, in the case of 6:5, a diamine to dianhydride ratio of 6:5 corresponds to polyamic acid with on average 6 diamine units and 5 dianhydride units. A diamine to dianhydride ratio of 1:1 corresponds to an infinite polyamic acid chain.

Optionally, the average length of the polyamic acid before crosslinking described herein is from 2,500 to 100,000 (molar mass g mol⁻¹).

The diamine and dianhydride monomers disclosed herein refer to the monomers that are present in the polymer. In other words, the above describes that the polyimide polymer of the two-phase material comprises one or more the above-listed monomers in polymeric form.

In an embodiment, the two-phase composite of the present invention is one, wherein the ratio of polyimide aerogel to inorganic mesoporous material, optionally silica aerogel, is 1:9 to 9:1 by weight, optionally 1:2 to 2:1 by weight.

Optionally, the two-phase composite of the present invention comprises about 20% to 30%, optionally 25% to 27% inorganic mesoporous material, optionally silica aerogel, by weight.

In another aspect, the present invention is directed to a method for preparing a two-phase composite as described herein, comprising the following steps:
(i) providing a polyamic acid, optionally by mixing diamine monomers and dianhydride monomers in an aprotic solvent,
(ii) forming a polyimide sol by adding acetic anhydride to the polyamic acid of (i), and optionally by heating, optionally to 200 to 400°C, and/or optionally by adding an imidization catalyst, optionally trimethylamine or pyridine,
(iii) optionally adding a crosslinker, optionally 1,3,5-benzenetricarbonyl trichloride (BTC), or 1,3,5-tris(4-aminophenoxy)benzene (TAB), to form a crosslinked polyimide sol,
(iv) adding an inorganic mesoporous material, optionally a silica aerogel powder, to the sol of step (ii), or optionally (iii), and
(v) drying the mixture of step (iv), optionally under supercritical CO₂.

In step (i) of the method described herein, the diamine monomers and a dianhydride monomers are optionally mixed in a molar ratio of diamine to dianhydride monomer of n:(n+1) or (n+1):n, n ≥5, as described above in the context of the composite of the invention. For example, a diamine to dianhydride ratio of 6:5 corresponds to polyamic acid with on average 6 diamine units and 5 dianhydride units. A diamine to dianhydride ratio of 1:1 theoretically corresponds to infinite polyamic acid chain. The definitions and explanations provided for the diamines and dianhydrides, as well as any other features provided in the context of the present two-phase composite also apply to the method of the present invention.

The imidization catalyst for use in the present method can be any catalyst that is suitable for promoting the imidization reaction. The skilled person can positively identify imidization catalysts by testing whether they promote the imidization reaction, e.g. a reaction according to Examples 1 to 4, e.g. by increasing the rate of conversion from polyamic acid to polyimide, e.g. by at least 5%, compared to the same reaction in the absence of the catalyst.

In step (i), the duration of the polymerization reaction varies and the progress may be inspected by known means, e.g. by IR spectroscopy, NMR or rheology measurements. The duration of the polymerization reaction in step (i) of the present method may be from 10 to 120 min, optionally from 20 to 60 min, optionally about 30 min, e.g. at room temperature.

The acetic anhydride and the imidization catalyst in step (ii) may be added together or separately in any order. The mixture may be stirred, e.g. at room temperature, e.g. for 2 to 120 min, optionally 5 to 30 min, optionally 5 to 15 min.

The optional crosslinker may be added in step (iii) neat or dissolved, e.g. in the solvent of step (i), and/or the mixture may be stirred in step (iii), e.g. for 2 to 15 min, optionally 3 to 10 min, optionally about 5 min.

The sequence of performing optional step (iii) after step (ii) provides more temporal flexibility for the addition of the inorganic mesoporous material and/or allows for the homogeneous distribution of the silica particles in the polyimide matrix.

For the inorganic mesoporous material of step (iv), all definitions provided in the context of the two-phase composite apply.

In step (iv), a two-phase system is obtained, e.g. by mixing or stirring. For example, upon addition of the inorganic mesoporous material in step (iv), the mixture is stirred, e.g. at high mechanical mixing speed, e.g. above 1000 rpm, e.g. at about 2000 rpm, for 30 s to 10 min, optionally 30 s to 5 min, optionally 1 to 2 min, optionally about 2 mins to obtain a two-phase system or composite (the terms are used interchangeably). Mixing can be performed, e.g., with a dual asymmetric centrifuge. Mixing or stirring speeds and time will vary, e.g., depending on the nature of the materials used, their concentrations and the absolute amounts of materials. The skilled person can routinely determine the mixing or stirring speed and duration necessary for obtaining a two-phase system according to the present invention, rather than a one phase system, e.g. by microscopic analysis of the gel as described in the Examples and Figures disclosed herein. For example, longer mixing or stirring times, e.g. longer than about 30 mins, will more likely lead to a one phase system.

A comparatively short (e.g. less than about 30, 25, 20, or 15 min) but intense (e.g. at more than about 1000 rpm) mixing or stirring is believed to prevent the break of the inorganic mesoporous material and to stop penetration of the polyimide into the pores of the inorganic mesoporous material. Also, and optionally, the crosslinker of optional step (iii) can induce an accelerated gelation of the polyimide phase and, this, fixes the granulates of the inorganic mesoporous material.

As a result of steps (i) to (iv), a two-phase composite is formed with a special structure composed of inorganic mesoporous material phase that is embedded in a polyimide matrix, e.g. as exemplified in Fig. 1. This structure is in contrast to a structure, wherein the polyimide would be distributed both, between and within the inorganic mesoporous material phase.

In an embodiment, the method of the present invention is one, wherein the aprotic solvent in step (i) is a polar aprotic solvent, optionally selected from the group consisting of N-methyl-2-pyrrolidone (NMP), dimethylformamide (DMF), dimethyl sulfoxide (DMSO) and dimethylacetamide (DMAc).

In an embodiment, the method of the present invention is one, wherein in step (iv), 10 to 150 g, optionally 20 to 90 g, optionally 40 to 80 g, optionally 60 to 70 g mesoporous material, optionally silica aerogel powder, are added per liter of polyimide sol.

In an embodiment, the method of the present invention is one, wherein the concentration of the polyamic acid in step (i) is about 50 to 150 g per liter, optionally about 60 to 100 g per liter.

In an embodiment, the method of the present invention is one, wherein step (iv) includes mixing after adding the silica aerogel powder for 30 s to 10 min, optionally 1 min to 5 min, optionally about 2 min.

In an embodiment, the method of the present invention is one, wherein after step (iv), the mixture is aged at a temperature between 0 and 80°C, optionally between 10 and 30°C.

In an embodiment, the method of the present invention is one, wherein after step (iv) and before step (v) the solvent is exchanged with acetone or alcoholic solvents, optionally ethanol, methanol, or isopropyl alcohol.

An exemplary non-limiting protocol for practicing the method of the present invention is provided in the following.
(i) A dianhydride, e.g. biphenyl-3,3',4,4'-tetracarboxylic dianhydride (BPDA), and a diamine, e.g. 4,4'-oxidianiline (ODA), are mixed in a solvent, e.g. in N-methyl-2-pyrrolidone (NMP). The molar ratio of diamine to dianhydride monomer, for any embodiment described herein, can be about 31:30 with a repeat unit of about 30. The concentration of the polymer in the solution can be set to about 7-10 wt.%, e.g. after 30 minutes polymerization under room temperature (S.T.P.).
(ii) A polyimide sol is formed. Adding acetic anhydride accelerates the sol formation, but the sol can also be formed in the absence of acetic anhydride and/or in the presence of other water-scavenging means, e.g. chemical or physical water-scavengers. Also, heat may optionally be applied, e.g. to 150 to 500, optionally 200 to 450, optionally 200 to 400°C. Alternatively or additionally, an imidization catalyst, e.g. trimethylamine (TEA) or pyridine, can be added. The whole mixture is stirred, e.g. for 5 to 15 minutes.
(iii) In the meantime, a crosslinker, e.g. BTC, can optionally be dissolved in the solvent (e.g. NMP), and the crosslinker (e.g. BTC) can be added neat or in solution to the polymer solution, and can be stirred, e.g. for 5 more minutes.
(iv) An inorganic mesoporous material, e.g. silica aerogel powder, is added to the solution. For example, 10-100 g, optionally 60 to 70g, optionally about 65 or 64 g inorganic mesoporous material (e.g. silica aerogel powder) can be added per liter. All reactants can, e.g., be transferred into a container, e.g. a polypropylene container, and speed mixed, e.g. with 2000 rpm for, e.g., 2 minutes. The mixture can be transferred into silicon molds. Gelation may occur, e.g., within 5 to 15 minutes, depending on the number of units and the imidization process. Samples can be aged, e.g. for 24 hours, e.g. at room temperature, and the solvent can be exchanged, e.g. with 75/25, 25/75, and 0/100 NMP/acetone, e.g. in 24 hours intervals.

In another aspect, the present invention is directed to a two-phase composite comprising an inorganic mesoporous material, optionally silica aerogel, embedded in a polyimide aerogel matrix obtained or obtainable by the method described herein.

In another aspect, the present invention is directed to a use of the two-phase composite described herein for thermal insulations, optionally in electronic devices, robotics, aviation, astronautics, refrigeration, industrial installations, and pipelines, or for use in low dielectric constant materials.

The following Figures and Examples serve to illustrate the invention and are not intended to limit the scope of the invention as described in the appended claims.

### Figures

**Fig. 1** shows an SEM image of a two-phase composite according to the present invention. A: silica aerogel phase, B: polyimide aerogel. The depicted composite comprises 7 wt.% Polyimide and biphenyl-3,3',4,4'-tetracarboxylic dianhydride (BPDA) and 4,4'-oxidianiline (ODA) with a molar ratio of 30:31, repeat unit 30, and 64 g/L SiO₂ aerogel powder.

### Examples

### Example 1: Preparation of a two-phase composite comprising an inorganic mesoporous material embedded in a polyimide aerogel matrix

4.3 g biphenyl-3,3',4,4'-tetracarboxylic dianhydride (BPDA) and 3 g 4,4'-oxidianiline (ODA) were mixed in a molar ratio of respectively 30:31 in 80 ml N-methyl-2-pyrrolidone (NMP) solvent, the concentration of the polymer in the solution was about 8 wt.%, after 30 minutes polymerization under room temperature (S.T.P.) (step 1). 11 ml acetic anhydride was added slowly to the solution followed by 1.5 g trimethylamine (TEA) and the whole mixture was stirred for 10 minutes (step 2). In the meantime, the 0.06 g BTC was dissolved in 10 ml NMP, the BTC solution was added to the polymer solution, and was stirred 5 more minutes (step 3). The sol was transferred into a polypropylene container, 5.8 g silica aerogel powders were added to the sol, and the blend was mixed in a planetary speed-mixer (DAC 150.1 FVZ; FlackTek) at 2000 r.p.m. for 1 minute (step 4). The mixture was transferred into silicon molds and the gelation occured within 15 minutes. Samples were aged 24 hours at room temperature (S.T.P.), and the solvent exchanged with 75/25, 25/75, and 0/100 NMP/acetone in 24 hours intervals. The composites were finally dried under supercritical CO₂ (step 5).

Materials properties: bulk density 0.11 g/cm³, surface area 610 m² g⁻¹, thermal conductivity of 19 mW m⁻¹ K⁻¹, 38% volumetric shrinkage at 200°C.

### Example 2: Alternative preparation of a two-phase composite comprising an inorganic mesoporous material embedded in a polyimide aerogel matrix

A procedure identical to that of example 1 was used, with the exception that during step 2, 1.5 ml pyridine was used for imidization.

Materials properties: bulk density 0.12 g/cm³, surface area 590 m² g⁻¹, thermal conductivity of 18.5 mW m⁻¹ K⁻¹, 40% volumetric shrinkage at 200°C.

### Example 3: Alternative preparation of a two-phase composite comprising an inorganic mesoporous material embedded in a polyimide aerogel matrix

A procedure identical to that of example 1 was used, with the exception that during step 1, 1.56 g 4,4'-diaminodiphenyl ether (ODA) and 1.65 g 2,2'-dimethylbenzidine (DMBZ) were used in 1:1 molar ratio as the diamine precursor to start the polymerization.

Materials properties: bulk density 0.09 g/cm³, surface area 630 m² g⁻¹, thermal conductivity of 18 mW m⁻¹ K⁻¹, 30% volumetric shrinkage at 200°C.

### Example 4: Alternative preparation of a two-phase composite comprising an inorganic mesoporous material embedded in a polyimide aerogel matrix

A procedure identical to that of example 1 was used, with the exception that during step 1, 1.6 g 4,4'-diaminodiphenyl ether (ODA) and 2.7 g 9,9-bis(4-aminophenyl)fluorene (BAPF) were used in 1:1 molar ratio as the diamine precursor to start the polymerization.

Materials properties: bulk density 0.09 g/cm³, surface area 700 m² g⁻¹, thermal conductivity of 17 mW m⁻¹ K⁻¹, 10% volumetric shrinkage at 200°C.

### Example 5: Comparative example with single phase structure

The single-phase material described in the article of Shuai Wu et al., RSC Adv., 2016, 6, 58268, is used as a comparative example for a single phase structure and confirms the inferior properties of the single-phase material compared to the two-phase composite of the present invention.

## Claims

1. A two-phase composite comprising an inorganic mesoporous material embedded in a polyimide aerogel matrix, wherein
(a) particles of the inorganic mesoporous material, optionally silica aerogel, in the composite have a diameter larger than or equal to 1 µm, optionally between 1 and 4000 µm, optionally between 4 and 200 µm, and
(b) the two-phase composite has a thermal conductivity of less than about 30 mW/(m^{∗}K), optionally less than about 25, 21 or 18 mW/(m^{∗}K).

2. The two-phase composite according to claim 1, wherein the inorganic mesoporous material is selected from silica aerogel, fumed silica, precipitated silica, alumina, zirconia, and carbon.

3. The two-phase composite according to claim 1 or 2, wherein the polyimide aerogel is crosslinked, optionally has a degree of crosslinking of more than 90%.

4. The two-phase composite according to any of claims 1 to 3, wherein
(a) the specific surface area of the composite is greater than 300 m²/g, optionally greater than 500 m²/g, optionally 500 to 900 m²/g; and/or
(b) the water contact angles on the composite are larger than about 100°, optionally larger than about 130° or 150°.

5. The two-phase composite according to any of claims 1 to 4, wherein the polyimide aerogel comprises
(a) diamine monomers selected from the group consisting of 4,4'-diaminodiphenyl ether (ODA); 2,2'-dimethylbenzidine (DMBZ); 9,9-bis(4-aminophenyl)fluorene (BAPF); 2-bis[4-(4-aminophenoxy) phenyl]propane (BAPP); and 4,4'-diaminodiphenylmethane (MDA) and combinations thereof;
(b) dianhydride monomers selected from the group consisting of 3,3',4,4'-biphenyltetracarboxylic dianhydride (BPDA); 4,4'-diphenyl ether dianhydride (ODPA); pyromellitic dianhydride (PMDA); 3,3',4,4 '-benzophenonetetracarboxylic dianhydride (BTDA); and combinations thereof; optionally BPDA and ODPA; and/or
(c) crosslinkers selected from the group consisting of 1,3,5-benzenetricarbonyl trichloride (BTC); 1,3,5-tris(4-aminophenoxy)benzene (TAB); polymaleic anhydride (PMA); tris(4-aminophenyl amine) (TAPA); and triisocyanate; optionally BTC and TAB,
wherein, optionally, the molar ratio of diamine to dianhydride monomers within the polyimide is n:(n+1) or (n+1):n, wherein n is an integer ≥5.

6. The two-phase composite according to any of claims 1 to 5, wherein the ratio of polyimide aerogel to inorganic mesoporous material, optionally silica aerogel, is 1:9 to 9:1 by weight, optionally 1:2 to 2:1 by weight.

7. A method for preparing a two-phase composite according to any of claims 1 to 6, comprising the following steps:
(i) providing a polyamic acid, optionally by mixing diamine monomers and dianhydride monomers in an aprotic solvent,
(ii) forming a polyimide sol by adding acetic anhydride to the polyamic acid of (i), and optionally by heating, optionally to 200 to 400°C, and/or optionally by adding an imidization catalyst, optionally trimethylamine or pyridine,
(iii) optionally adding a crosslinker, optionally 1,3,5-benzenetricarbonyl trichloride (BTC), or 1,3,5-tris(4-aminophenoxy)benzene (TAB), to form a crosslinked polyimide sol,
(iv) adding an inorganic mesoporous material, optionally a silica aerogel powder, to the sol of step (ii), or optionally (iii), and
(v) drying the mixture of step (iv), optionally under supercritical CO₂.

8. The method according to claim 7, wherein the aprotic solvent in step (i) is a polar aprotic solvent, optionally selected from the group consisting of N-methyl-2-pyrrolidone (NMP), dimethylformamide (DMF), dimethyl sulfoxide (DMSO) and dimethylacetamide (DMAc).

9. The method according to claim 7 or 8, wherein in step (iv), 10 to 150 g, optionally 20 to 90 g, optionally 40 to 80 g mesoporous material, optionally silica aerogel powder, are added per liter of polyimide sol.

10. The method according to any of claims 7 to 9, wherein the concentration of the polyamic acid in step (i) is about 50 to 150 g per liter, optionally about 60 to 100 g per liter.

11. The method according to any of claims 7 to 10, wherein step (iv) includes mixing after adding the silica aerogel powder for 30 s to 10 min, optionally 1 min to 5 min, optionally about 2 min.

12. The method according to any of claims 7 to 11, wherein after step (iv), the mixture is aged at a temperature between 0 and 80°C, optionally between 10 and 30°C.

13. The method according to any of claims 7 to 12, wherein after step (iv) and before step (v) the solvent is exchanged with acetone or alcoholic solvents, optionally ethanol, methanol, or isopropyl alcohol.

14. A two-phase composite comprising an inorganic mesoporous material, optionally silica aerogel, embedded in a polyimide aerogel matrix obtained or obtainable by the method according to any of claims 7 to 13.

15. A use of the two-phase composite according to any of claims 1 to 6 or 14 for thermal insulations, optionally in electronic devices, robotics, aviation, astronautics, refrigeration, industrial installations, and pipelines, or for use in low dielectric constant materials.
